# EUROPÄISCHE PATENTSCHRIFT

(11) **EP 1 123 346 B1**
(45) Veröffentlichungstag und Bekanntmachung des Hinweises auf die Patenterteilung: **13.04.2005**
(21) Anmeldenummer: 99952480.4
(22) Anmeldetag: 01.10.1999
(51) Int. Cl.: C08K 7/00, B01J 2/20

(54) **ADDITIVE FÜR DIE VERARBEITUNG VON KUNSTSTOFFEN**
ADDITIVES FOR PROCESSING PLASTICS
ADDITIFS POUR LA MISE EN OEUVRE DES MATIERES PLASTIQUES

(30) Priorität: 10.10.1998 DE 19846774
(43) Veröffentlichungstag der Anmeldung: 16.08.2001
(73) Patentinhaber: Cognis Deutschland GmbH & Co. KG, 40589 Düsseldorf (DE)
(72) Erfinder: DAUTE, Peter, D-27616 Beverstedt (DE); KLAMANN, Jörg-Dieter, D-27574 Bremerhaven (DE); WEDL, Peter, D-27568 Bremerhaven (DE); SEITER, Wolfgang, D-41469 Neuss (DE)
(86) Internationale Anmeldenummer: PCT/EP1999/007274
(87) Internationale Veröffentlichungsnummer: WO 2000/022038

(56) Entgegenhaltungen:
- EP-A- 0 719 824
- EP-A- 0 802 241
- NL-A- 8 104 925

## Beschreibung

### Gebiet der Erfindung

Die Erfindung betrifft Additive für die Verarbeitung von Kunststoffen, wobei die Additive in Granulat-förmiger Angebotsform vorliegen, dadurch gekennzeichnet, dass das Granulat in Form von kugelförmigen bis zylindrischen Körnern mit einem Länge/Durchmesser-Verhältnis im Bereich von 1:1 bis 3:1 vorliegt und die Enden der zylinderförmigen Teilchen nach der Extrusion in Rondiergeräten chargenweise oder kontinuierlich verrundet wurden. Die Erfindung betrifft weiterhin Mittel für die Kunststoffverarbeitung, enthaltend solche Granulate sowie die Verwendung solcher Granulate als Hilfsmittel zur Verarbeitung von Kunststoffen.

### Stand der Technik

Kunststoffe sind Polymere, die strukturell aus Molekülketten mit zahlreichen, sich praktisch endlos wiederholenden Bausteinen bestehen, welche sich in bezug auf die physikalischen Eigenschaften von niedermolekularen Verbindungen unterscheiden. So weisen Polymere im Vergleich zu niedermolekularen Verbindungen beispielsweise hohe Zugfestigkeiten und Elastizität auf.

In polymerisierte Kunststoffmassen werden im Zuge der industriellen Verarbeitung - je nach Weiterverarbeitung und Zweckbestimmung - geeignete Zusatzstoffe, sogenannte Additive, eingemischt. Auf diese Weise können Basispolymere an individuelle Bedürfnisse hinsichtlich der gewünschten Eigenschaften angepaßt werden.

Kunststoffadditive werden in den unterschiedlichsten Konfektionierungsformen angeboten. Für feste Verbindungen ist die einfachste Anbietungsform das Pulver. Pulver kann jedoch leicht verbacken und führt beim Verarbeiten zum Stauben. Durch Verpressen des Pulvers in einem Granulator erhält man ein Stäbchengranulat**.** Der Staubanteil ist gering, es können aber durch die schlechtere Förderfähigkeit und den vorhandenen Staubanteil Probleme bei der Verarbeitung auftreten. Für einige Additive, die einen hohen schmelzbaren Anteil besitzen bietet sich auch die Pastille oder Schuppe als Lieferform an. Für die Herstellung wird das jeweilig Produkt aufgeschmolzen und dann auf gekühlte Schuppenwalzen oder Bändern abgekühlt. Pastillen sind staubfrei und können leicht in den Kunststoff eingearbeitet werden. Thermisch labile oder reaktionsfähige Verbindungen können jedoch nicht geschuppt oder pastilliert werden.

### Beschreibung der Erfindung

Aufgabe der vorliegenden Erfindung war es, Additive für die Verarbeitung von Kunststoffen in einer Form zur Verfügung zu stellen, die eine leichte Handhabbarkeit garantiert und die eine gute Einarbeitbarkeit in thermoplastische Kunststoffe gewährleistet.

Es wurde nun gefunden, dass extrudierte Kunststoffadditive durch Verrundung wie Marumerizieren in eine annähernd kugelförmige bis zylindrische Gestalt gebracht werden können. Derartig geformte Granulate ("Perlen") bieten einerseits den Vorteil der guten Förderbarkeit und Staubfreiheit, andererseits lassen sie sich bei der Verarbeitung von thermoplastischen Kunststoffen gut einarbeiten, d.h. in den Kunststoffen dispergieren.

Die so hergestellten Additiv-Perlen eignen sich hervorragend als Angebotsform für Kunststoffadditive, insbesondere für Stabilisator- und/oder Gleitmittel-Compounds für die PVC-Verarbeitung, beispielsweise solcher auf Calcium/Zink- sowie Blei-Basis.

Gegenstand der vorliegenden Erfindung sind Additive für die Verarbeitung von Kunststoffen, wobei die wobei die Additive ausgewählt sind aus der Gruppe die gebildet wird von Antistatika, Antischleiermittel, Antioxidantien, UV-Stabilisatoren, Haftmittel, Kalandrierhilfen, Formtrennmittel, Gleitmittel, Trennmittel, Schmiermittel, Weichmacher, Duflmittel, Flammschutzmittel, Füllstoffe und Mittel zur Erhöhung der Therrnostabilität (Thermostabilisatoren), und in granulatförmiger Ange-botsform vorliegen, dadurch gekennzeichnet, dass das Granulat in Form von kugelförmigen bis zylindrischen Körnern mit einem Länge/Durchmesser-Verhältnis im Bereich von 1:1 bis 3:1 vorliegt und die Enden der zylinderförmigen Teilchen nach der Extrusion in Rondiergeräten chargenweise oder kontinuierlich verrundet wurden.

Im Hinblick auf das Länge/Durchmesser-Verhältnis sei auf folgendes hingewiesen: Die erfindungsgemäßen Additiv-Granulate haben die Form von Rotationskörpern (daher kann man anschaulich auch von "Perlen" sprechen). Die Länge der Längsachse der Perlen wird dabei als "Länge" und der maximale Durchmesser der Perlen (senkrecht zur Längsachse gemessen) als "Durchmesser" bezeichnet Im Falle, dass das Länge/Durchmesser-Verhältnis 1:1 beträgt, handelt es sich um Kugeln. Bei der unten näher beschriebenen Art der Herstellung der Additiv-Granulate ergibt sich die Perlenform dadurch, dass nach Extrusion nebst Abschlagen am Granulierkopf mit Lochdüsenplatten zunächst zylinderförmige Teilchen erhalten werden, deren Enden dann in Rondiergeräten verrundet werden.

Die erfindungsgemäße Angebotsform der Kunststoffadditive vereinigt in sich mehrere gute anwendungstechnische Eigenschaften, die in dieser Häufung nicht bei herkömmlichen Anbietungsformen wie Pulvern oder Pastillen auftreten. Für experimentelle Belege sei auf den Beispielteil verwiesen. Wie oben bereits gesagt handelt es sich bei diesen positiven anwendungstechnischen Eigenschaften um ausgezeichnete Förderbarkeit, ferner um Staubfreiheit, beides Eigenschaften die eine exzellente Handhabbarkeit gewährleisten. Darüber hinaus eröffnet die erfindungsgemäße Angebotsform reichhaltige Möglichkeiten im Hinblick auf die "Breite der Rezeptur"; darunter ist zu verstehen, dass die erfindungsgemäßen Perlen nicht nur ein einziges Additiv enthalten können, sondern auch mehrere und zwar unabhängig davon ob diese Additive etwa thermisch labil sind, nicht oder schwer aufschmelzbar sind, ansonsten schwer handhabbare Polymere darstellen usw. Die genannten positiven anwendungstechnischen Eigenschaften bleiben auch dann erhalten, wenn die Rezepturbandbreite der erfindungsgemäßen Perlen hoch ist, also wenn mehrere unterschiedliche - darunter durchaus auch thermolabile und ansonsten an sich schwer handhabbare - Additive in den Perlen vorhanden sind.

Die Kunststoffe können im Rahmen der vorliegenden Erfindung aus den dem Fachmann einschlägig bekannten thermoplastischen Kunststoffen an sich beliebig gewählt werden. Beispiele für geeignete Kunststoffe sind:
- Homopolymere aus einem α-Olefin mit zwei bis acht Kohlenstoffatomen, Copolymerisate von zwei entsprechenden α-Olefinen, vorzugsweise Copolymerisate aus Ethylen, Ethylen-Homopolymerisate wie HDPE (high density polyethylene), LDPE (low density polyethylene), VLDPE (very low density polyethylene), LLEPE (linear low density polyethylene), MDPE (medium density polyethylene), UHMPE (ultra high molecular polyethylene), VPE (vernetztes Polyethylen), HPPE (high pressure polyethylene), isotaktisches Polypropylen, syndiotaktisches Polypropylen, Metallocenkatalysiert hergestelltes Polypropylen, schlagzäh-modifiziertes Polypropylen, Random-Copolymere auf Basis Ethylen und Propylen, Blockcopolymere auf Basis Ethylen und Propylen, Homopolymere auf Basis 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2, 3-Dimethyl-1-Butylen, 2-Ethyl-1-Butylen sowie Mischungen davon.
- Copolymerisate von Ethylen mit 1-Butylen, 1-Hexylen, 1-Octylen und 4-Methyl-1-Pentylen.
- Ethylen-Vinylacetat-Copolymerisate, Ethylenethylacetat-Copolymerisate, Ethylenacrylsäure-Copolymerisate und Mischungen davon.
- Ethylenpropylengummi (EPDM), auch Dien-modifiziert (EPR), Styrol-Butadien-Styrol-Copolymerisate (SBS), Styrol-Ethylen-Buthylen-Styrol-Copolymerisate (SEBS) und Mischungen davon.
- Halogenhaltige Kunststoffe, insbesondere Homopolymerisate von Vinylverbindungen, beispielsweise von Vinylchlorid.

Im Hinblick auf die Begriffe "Gleitmittel" und "Trennmittel" sei auf folgendes hingewiesen: Nach dem üblichen Sprachgebrauch des Fachmanns bezeichnet man solche Produkte als Trennmittel, die die Reibungswiderstände überwiegend zwischen Polymerschmelze und Stahloberfläche der bei der formgebenden Verarbeitung eingesetzten Maschine reduzieren; die Reduktion des Reibungswiderstandes hat zur Folge, dass der Massedruck der Schmelze reduziert wird. Demgegenüber wirken Gleitmittel überwiegend in der Polymerschmelze und setzen die internen Reibungskräfte herab, wodurch die Schmelze auch bei hohen Füllstoffgehalten einen guten plastischen Fluß behält, der für die Ausfüllung des formgebenden Werkzeugs von Bedeutung ist.

In einer Ausführungsform der vorliegenden Erfindung werden als Gleit- bzw. Trennmittel bei 20°C feste oder flüssige Calciumsalze und/oder Magnesiumsalze und/oder Aluminiumsalze und/oder Zinksalze eingesetzt, die ausgewählt sind aus
a) Calciumsalzen von gesättigten oder ungesättigten, geradkettigen oder verzweigten Monocarbonsäuren mit 6 bis 36 C-Atomen,
b) Calciumsalzen der unsubstituierten oder mit C₁₋₄-Alkylresten substituierten Benzoesäure,
c) Zinksalzen von gesättigten oder ungesättigten, geradkettigen oder verzweigten Monocarbonsäuren mit 6 bis 36 C-Atomen,
d) Magnesiumsalzen von gesättigten oder ungesättigten, geradkettigen oder verzweigten Monocarbonsäuren mit 6 bis 36 C-Atomen,
e) Magnesiumsalzen von gesättigten oder ungesättigten Dicarbonsäuren mit 6 bis 10 C-Atomen,
f) Aluminiumsalzen von gesättigten oder ungesättigten, geradkettigen oder verzweigten Monocarbonsäuren mit 6 bis 36 C-Atomen

Für die vorstehend genannten Calcium-, Magnesium-, Zink- und Aluminiumsalze gilt, dass sie sowohl allein als auch in Mischung untereinander eingesetzt werden könnten.

Weitere Gleit- bzw. Trennmittel, die alleine oder in Kombination miteinander eingesetzt werden können, sind die hierfür einschlägig aus dem Stand der Technik bekannten Substanzen. Vorzugsweise kommen folgende Verbindungstypen in Frage: Kohlenwasserstoffwachse, die im Temperaturbereich von 70 bis 130°C schmelzen, oxidierte Polyethylenwachse, freie Fettsäuren mit 8 bis 22 C-Atomen und deren verzweigtkettige Isomere, beispielsweise Stearinsäure oder auch Hydroxystearinsäure, α-Olefine, Wachsester, d. h. Ester aus längerkettigen Monocarbonsäuren und Monoalkoholen, primäre und sekundäre, gesättigte und ungesättigte höhere Alkohole mit vorzugsweise 16 bis 44 C-Atomen im Molekül, Ethylendiamindistearat, Montansäureester von Diolen, beispielsweise von E-thandiol, 1,3-Butandiol und Glycerin, Mischungen derartiger Montansäureester mit unveresterten Montansäuren, Partialester aus Fettsäuren mit 8 bis 22 C-Atomen und Polyolen mit 2 bis 6 C-Atomen und 2 bis 6 Hydroxylgruppen, die pro Molekül im Durchschnitt mindestens eine freie Polyol-Hydroxylgruppe enthalten. Einsetzbar sind weiterhin die in der DE-C-19 07 768 beschriebenen Mischester mit Hydroxyl- bzw. Säurezahlen im Bereich von 0 bis 6 aus aliphatischen, cycloaliphatischen oder aromatschen Dicarbonsäuren mit 2 bis 22 C-Atomen im Molekül, aliphatischen Polyolen mit 2 bis 6 Hydroxylgruppen im Molekül und aliphatischen Monocarbonsäuren mit 12 bis 30 C-Atomen im Molekül. Beispiele hierfür sind Mischester aus Maleinsäure-Pentaerythrit-Behensäure, Mischester aus Adipinsäure-Pentaerythrit-Ölsäure und Mischester aus Adipinsäure-Pentaerythrit-Stearinsäure. Derartige Gleit- oder Trennmittel können im Rahmen der vorliegenden Erfindung sowohl einzeln, als auch in Kombination miteinander, sowie auch in Kombination mit dem oben genannte Calcium-, Magnesium- oder Aluminiumsalzen eingesetzt werden.

In einer Ausführungsform der vorliegenden Erfindung werden als Füllstoffe Verbindungen eingesetzt, die ausgewählt sind aus der Gruppe: Talkum, Kaolin, Kreide und dergleichen.

In einer Ausführungsform der vorliegenden Erfindung werden als Thermostabilisatoren Verbindungen eingesetzt, die ausgewählt sind aus der Gruppe: Calcium und/oder Zinkseifen, Antioxidantien, kationische Schichtverbindungen - beispielsweise Hydrotalcite oder modifiziete Hydrotalcite -, Zeolithe.

Additive, die im Bereich der Kunststoffverarbeitung eingesetzt werden, können - wie dem Fachmann bekannt - nicht nur hinsichtlich ihrer Funktion klassifiziert werden, sondern auch hinsichtlich ihrer chemischen Struktur. Auch unter der Perspektive eines strukturellen Ansatzes gilt, dass die Additive im Rahmen der vorliegenden Erfindung keinerlei Beschränkungen unterliegen. In diesem Zusammenhang sei darauf hingewiesen, dass Verbindungen einer bestimmten Stoffklasse, mithin Verbindungen die unter strukturellen Gesichtspunkten derselben Klasse zugeordnet werden können, in der Praxis häufig nicht nur eine Funktion erfüllen, sondern zwei oder mehrere. So können beispielsweise Calcium- bzw. Zinkseifen - wie oben beschrieben - als Gleit- und/oder Trennmittel wirken, sie können aber auch - etwa bei der Verarbeitung des Kunststoffes Polyvinylchlorid (PVC) - als Mittel zur Verbesserung der Thermostabilität dienen.

Die Herstellung der erfindungsgemäßen Additiv-Granulate ("Perlen") erfolgt in der Regel wie folgt: Eine Kunststoffadditiv-haltige Zusammensetzung, insbesondere eine Zusammensetzung, die ausschließlich aus Kunststoff-Additiven besteht, wird in einen 1-oder 2-welligen Extruder eingebracht. Bevorzugt sind 2-wellige Schneckenkneter-Extruder (2-Wellen-Gleichläufer-Extruder oder Gegenläufer-Extruder), wobei man insbesondere einen Extrusionsdruck im Bereich von 15 bis 100 bar und ganz bevorzugt im Bereich von 25 bis 60 bar einstellt. Die Temperatur im Extruder ist an sich nicht kritisch, insbesondere arbeitet man jedoch im Bereich von 20 bis 110 °C. Die eingesetzten Extruder werden mit Granulierköpfen versehen, die insbesondere Lochdüsenplatten aufweisen; dies hat zur Folge, dass zu feinen Strängen extrudiert wird, die nach dem Düsenaustritt mittels eines Abschlagmessers in zylindrische Granulate überführt werden. Vorzugsweise verwendet man solche Lochdüsenplatten, die Bohrungen mit Durchmessern im Bereich von 0,8 bis 5 mm und insbesondere 1,5 bis 2,5 mm aufweisen. Die Abschlagtemperatur wird vorzugsweise im Bereich von 30 bis 110 °C eingestellt, wobei 40 bis 80 °C besonders bevorzugt sind. Diese Granulate werden dann in üblichen Rondiergeräten chargenweise oder kontinuierlich verrundet. Bei der Verrundung stellt man die Temperatur so ein, dass die Masse eine hinreichende Plastizität besitzt. Vorzugsweise arbeitet man dabei im Temperaturbereich von 20 bis 110 °C. Einschlägige Verrundungstechniken sind dem Fachmann bekannt, insbesondere die Technik des Marumerisierens. In diesem Zusammenhang sei beispielhaft auf die Offenbarung der deutschen Patentschrift **DE-C-12 94 351** "Vorrichtung zur Herstellung von kugelförmigen Körnern aus feuchten, vorgeformten Teilchen" verwiesen, in der eine Rondiervorrichtung mit rotierender Bodenscheibe beschrieben wird, wobei durch Variation der Granulat-Verweilzeit im Rondiergerät und/oder der Rotationsgeschwindigkeit der Gerätescheibe der gewünschte Abrundungsgrad eingestellt werden kann. Im Rahmen der vorliegenden Erfindung lassen sich insbesondere alle handelsüblichen Rondiergeräte einsetzen.

In einer Ausführungsform können die primär gebildeten und noch plastischen Additiv-Granulat-Kömer vor, während oder nach der Rondierung mit weiteren Wirkstoffen beaufschlagt werden. Dabei kann es sich beispielsweise um besonders temperaturempfindliche Kunststoffadditive handeln. In einer besonders bevorzugten Ausführungsform sind die erfindungsgemäßen Additiv-Granulate an der Oberfläche mit ein oder mehreren Verbindungen bepudert. Hierzu eignen sich insbesondere organische Wirkstoffe, anorganische Wirkstoffe und Trennmittel, die einzeln oder in Kombination untereinander eingesetzt werden können. Ganz besonders geeignet sind dabei Zeolithe sowie kationische Schichtgitterverbindungen, etwa Hydrotalcite oder modifizierte Hydrotalcite. Die zum Bepudern eingesetzten Verbindungen werden insbesondere in Mengen von 0,01 bis 5 Gew.% - bezogen auf die Additiv-Granulate (Perlen) - eingesetzt. Vorzugsweise geschieht das Bepudem zugleich mit dem Verrunden.

Wie bereits gesagt liegen die erfindungsgemäßen Kunststoffadditiv-Granulate ("Perlen") in Form von kugelförmigen bis zylindrischen Körnern mit einem Länge/Durchmesser-Verhältnis im Bereich von 1:1 bis 3:1 vor. In einer wichtigen Ausführungsform sind Teilchengröße und Teilchenform einheitlich. Die bevorzugte Teilchenform ist die Kugelform. Bevorzugte Teilchengrößen liegen im Bereich von 0,5 bis 5 mm Kugeldurchmesser, insbesondere im Bereich von 0,8 bis 3 mm. Die Bestandteile dieser Kugeln können dabei nach Art und Menge den heute üblichen Rezepturen für Kunststoffadditiv-Zusammensetzungen entsprechen.

In einer weiteren Ausführungsform können die erfindungsgemäßen Additiv-Granulate recyclisiert werden. Darunter ist zu verstehen, dass sie im ersten Verfahrensschritt zur Herstellung der Additiv-Granulate - dem Extrudieren - in Kombination mit anderen Stoffen erneut eingesetzt werden können.

Ein weiterer Gegenstand der Erfindung sind Mittel für die Kunststoffverarbeitung, enthaltend Additive für die Kunststoffverarbeitung, wobei diese Mittel in Granulat-förmiger Angebotsform vorliegen und wobei das Granulat in Form von kugelförmigen bis zylindrischen Körnern mit einem Länge/Durchmesser-Verhältnis im Bereich von 1:1 bis 3:1 vorliegt, deren Enden nach der Extrusion in Rondiergeräten chargenweise oder kontinuierlich verrundet wurden.

Ein weiterer Gegenstand der Erfindung ist die Verwendung von Granulaten als Hilfsmittel zur Verarbeitung von Kunststoffen, dadurch gekennzeichnet dass die Granulate aus einem oder mehreren üblichen Kunststoffadditiven bestehen und in Form von kugelförmigen bis zylindrischen Körnern mit einem Länge/Durchmesser-Verhältnis im Bereich von 1:1 bis 3:1 vorliegen.

Ein weiterer Gegenstand der Erfindung ist ein Verfahren zur Herstellung von Kunststoffen, wobei man pulverförmige und/oder granulatförmige thermoplastische Homound/oder Copolymere zusammen mit den erfindungsgemäßen Additiv-Granulaten einer formgebenden Verarbeitung, insbesondere Extrusion, Spritzguß oder Folienblasen unterwirft. Dabei könnnen alle dem Fachmann einschlägig bekannten Vorrichtungen eingesetzt werden, bei der Extrusion insbesondere die verschiedensten handelsüblichen Einund Doppelschneckenextruder.

### Beispiele

### 1. Materialien

Für die untenstehenden Untersuchungen wurde ein handelsüblicher pulverförmiger Ca/Zn-Stabilisator ("Stabilox CZ 2697"; Fa. Henkel/Düsseldorf)
- zu einem Stäbchengranulat (= nicht-erfindugsgemäßes Additiv-Granulat zu Vergleichszwecken) und ferner
- zu abgerundeten Perlen (= erfindungsgemäßes Additiv-Granulat) verarbeitet.

### 2. Herstellung der Materialien

### 2.1. Stäbchengranulat

Für die Herstellung des Stäbchengranulates wurde ein CPM-Granulator eingesetzt (Preßtemperatur = 30 °C). Die erhaltenen Stäbchen wiesen einen Durchmesser von 3 mm und eine Länge von etwa 5 mm auf.

### 2.2. Perlen

Die Herstellung der erfindungsgemäßen Additiv-Granulate geschah wie folgt: Pulverförmiges Stabilox CZ 2697 wurde kontinuierlich einem 2-Schnecken-Kneter (Extruder vom Typ ZSK 25 der Fa. Werner & Pfleiderer = zweiwelliger Schneckenkneter-Gleichläufer-Extruder; Schneckendurchmesser = 25 mm; L/D = 12) zugeführt, dessen Gehäuse einschließlich des Extruder Granulierkopfes auf 50 °C temperiert war. Die Schneckendrehzahl betrug dabei 160 UpM, der Extrusionsdruck = 42 bar, der spezifische Energieeintrag = 0,017 kWh/kp. Durch die Extruder-Kopf-Lochdüsenplatte wurde zu feinen Strängen extrudiert, die nach dem Düsenaustritt mittels eines Abschlagmessers zu zylindrischen Granulaten zerkleinert wurden (Heißabschlag-Granulierkopf mit einem Düsenplättchen mit 47 2-mm-Bohrungen; 2-flügeliges Messer; Abschlagtemperatur von 50 °C; Messerdrehzahl = 2650 UpM). Das aus der Extruder-Granulierung anfallende Granulat wurde in einem handelsüblichen Rondiergerät vom Typ Marumerizer (Schlüter Spheronizer RM 400) verrundet (Verrundungsbedingungen: Drehzahl = 320 UpM; Verweilzeit = 30 s). Im Verrundungsapparat wurde mit 3 Gew.-% - bezogen auf eingesetztes Stabilox CZ 2697 - Sasil A 40 (Wessalith P / Fa. Degussa) abgepudert. Anschließend erfolgte eine Granulat-Siebung durch ein 2,5-mm-Sieb, wobei etwa 10% Überkorn (Agglomerate) abgesiebt wurden. Die erhaltenen Additiv-Granulate ("Perlen") waren annähernd kugelförmig.

### 3. Anwendungstechnische Prüfungen

### 3.1. Bestimmung des Abriebs

Je 50 g des Stäbchen-förmigen und des Perlen-förmigen Ca/Zn-Stabilisators (hergestellt wie oben beschrieben gemäß 2.1 bzw. 2.2) in einem Retsch-Siebanalysegerät mechanisch belastet und der Abrieb bestimmt. Folgende Parameter wurden dabei eingestellt: Zeit 5 min, Schwingungsamplitude 1 mm, Maschenweite Prüfsieb: 0,315 mm.

| **Abrieb** | | |
|---|---|---|
| *Anbietungsform* | *Abrieb [g]* | *Abrieb [%]* |
| Stäbchengranulat gemäß 2.1. | 0,23 | 0,46 |
| Perlen gemäß 2.2. | 0,02 | 0,04 |

Wie aus der Tabelle ersichtlich wiesen die Perlen einen erheblich geringeren Abrieb auf. Dies ist unter anwendungstechnischen Gesichtspunkten von großer praktischer Bedeutung.

### 3.2. Bestimmung der Förderfähigkeit

Zur Bestimmung der Förderfähigkeit wurden je 96 g des Stäbchengranulats gemäß 2.1. und der Perlen gemäß 2.2. in einen unten verschlossenen Trichter gegeben, der Auslauf geöffnet und die Auslaufzeit gemessen. Der Trichter (Polyethylen-Pulvertrichter mit oberem Durchmesser von 105 mm) hatte folgende Abmessungen: Durchmesser des Auslaufs: 23 mm, Länge des Auslaufs: 23 mm.

| **Förderfähigkeit** | |
|---|---|
| *Anbietungsform* | *Auslaufzeit [s]* |
| Stäbchengranulat | 2.6 / 3.2 / 2.8 |
| Perlen | 1.5 / 1.4 / 1.4 |
| Die Auslaufzeiten wurden jeweils 3-fach bestimmt | |

Wie aus der Tabelle ersichtlich war die Auslaufzeit bei den erfindungsgemäßen Perlen signifikant geringer als bei dem Stäbchengranulat. Dies bedeutet für die Praxis, dass eine klar verbesserte Förderfähigkeit, insbesondere eine höhere Fördergeschwindigkeit gegeben ist.

### 3.3. Einsatz in PVC-Rezepturen

Am Beispiel des Ca/Zn-Stabilisators Stabilox CZ 2697 wurden die anwendungstechnischen Eigenschaften von Pulver, Stäbchengranulat und Perlen verglichen. Dazu wurden die einzelnen Anbietungsformen mit Polyvinylchlorid (PVC, "Evipol SH 6830" = handelsübliches Suspensions-PVC) in einem Mischer der Fa. Herschel zu einem Dry-Blend verarbeitet (Materialmenge: 3kg, Heizen bis 120 °C, anschließend Abkühlen).

| **Rezepturen** | | | |
|---|---|---|---|
| | *B1* | *B2* | *B3* |
| EVIPOL SH 6830 | 100 | 100 | 100 |
| Stabilox CZ 2697 (Pulver gemäß 1.) | 3.35 | - | - |
| Stabilox CZ 2697 (Stäbchengranulat gemäß 2.1.) | - | 3.35 | - |
| Stabilox CZ 2697 (Perlen gemäß 2.2.) | - | - | 3.35 |
| Angaben in der Tabelle in Gewichtsteilen | | | |

Die Rezepturen B1 bis B3 (Dry-Blends) wurden zunächst hinsichtlich Siebrückstand und Schüttgewicht untersucht:

| **Siebrückstand und Schüttgewicht** | | |
|---|---|---|
| | Siebrückstand [> 0.5 mm] | Schüttgewicht |
| Rezeptur B1 | 0.09 | 621 |
| Rezeptur B2 | 0.12 | 617 |
| Rezeptur B3 | 0.07 | 614 |
| Siebrückstand: Angaben in g bezogen auf 200 g Dry-Blend | | |
| Schüttgewicht: Angaben in g/l | | |

Zur Erläuterung der Bestimmung des Siebrückstandes: Als Indikator für das Ausmaß der Dispergierung beim Mischen wurden 200 g des Dry-Blend über ein Sieb mit der Maschenweite 0,5 mm gesiebt. Alle Partikel, die eine Größe oberhalb von 0,5 mm aufweisen, bleiben bei diesem Test im Sieb. Man spricht in diesem Zusammenhang vom Siebrückstand.

Anschließend wurden die Dry-Blends auf einem Doppelschnecken-Extruder der Fa. Weber zu einem Flachband extrudiert. Bei der Extrusion wurden folgende Parameter eingestellt: Drehzahl = 20 UpM, Maschinenbelastung = 42, Temperatur = 180 °C. Das Flachband wies eine Dicke von 1,5 mm und eine Breite von 25 mm auf.

Unmittelbar nach der Herstellung der Flachbänder wurde deren Farbe, die sogenannte Anfangsfarbe, bestimmt. Hierzu wurde die dem Fachmann bekannte L*,a*,b*-Methode (vergleiche DIN 6174, CIELAB 1976) herangezogen. Der b*-Wert gibt dabei die Lage auf der Blau/Gelb-Achse an. Üblicherweise wird der b*-Wert auch Gelbwert genannt. Bei den Messungen kam ein handelsübliches Gerät mit der Bezeichnung "Micro Color" (Fa. Dr. Lange) zum Einsatz. Die Farbwerte sind in der nachfolgenden Tabelle zusammengestellt. Als weiterer Parameter wurde bestimmt, wie lange es dauert, bis sich die Teststreifen bei einer Temperaturbehandlung in einem Thermoofen schwarz färbten (vergleiche DIN 5033). Zu diesem Zweck wurden die Flachbänder bei 180 °C in einem Thermoofen getempert, wobei sie im Abstand von 15 Minuten zur visuellen Kontrolle kurz aus dem Ofen herausgefahren wurden. Die Zeit in Minuten bis zur Schwarzfärbung wird als Langzeitstabilität bezeichnet. Die Prüfergebnisse sind in der nachfolgenden Tabelle zusammengestellt:

| **Thermostabilität** | | | |
|---|---|---|---|
| | Gelbwert b* nach | | Langzeitstabilität (=Stabilitätsende nach) |
| | 0 min | 15 min | |
| Rezeptur B1 | 15 | 34 | 90 min |
| Rezeptur B2 | 15 | 35 | 90 min |
| Rezeptur B3 | 15 | 35 | 90 min |

Insgesamt zeigte sich, dass das Flachband, dass unter Einsatz der erfindungsgemäßen Perlen hergestellt worden war (Rezeptur B3), ebenso thermostabil war, wie die Flachbänder, die unter Einsatz von Pulver oder Stäbchengranulat hergestellt worden waren (Rezepturen B1 und B2). Mithin sind die oben genannten anwendungstechnischen Vorteile der erfindungsgemäßen Additiv-Granulate ("Perlen") - also insbesondere geringerer Staubanteil, bessere Förderfähigkeit, bessere Flexibilität bei der Formulierung von Rezepturen - ohne negative Auswirkungen auf deren Fähigkeit zur Thermostabilisierung von PVC.

## Patentansprüche

1. Additive für die Verarbeitung von Kunststoffen, wobei die Additive ausgewählt sind aus der Gruppe die gebildet wird von Antistatika, Antischleiermittel, Antioxidantien, UV-Stabilisatoren, Haftmittel, Kalandrierhilfen, Formtrennmittel, Gleitmittel, Trennmittel, Schmiermittel, Weichmacher, Duftmittel, Flammschutzmittel, Füllstoffe und Mittel zur Erhöhung der Thermostabilität (Thermostabilisatoren), und in granulatförmiger Angebotsform vorliegen, **dadurch gekennzeichnet, dass** das Granulat in Form von kugelförmigen bis zylindrischen Körnern mit einem Länge/Durchmesser-Verhältnis im Bereich von 1:1 bis 3:1 vorliegt und die Enden der zylinderförmigen Teilchen nach der Extrusion in Rondiergeräten chargenweise oder kontinuierlich verrundet wurden.

2. Additive nach Anspruch 1, wobei die Oberfläche der Granulatkörner zusätzlich mit anorganischen und/oder organischen Wirkstoffen und/oder Trennmitteln bepudert ist.

3. Mittel für die Kunststoffverarbeitung, enthaltend Granulate gemäß den Ansprüchen 1 oder 2.

4. Verwendung von Granulaten als Hilfsmittel zur Verarbeitung von Kunststoffen, **dadurch gekennzeichnet dass** die Granulate aus einem oder mehreren üblichen Kunststoffadditiven bestehen und in Form von kugelförmigen bis zylindrischen Körnern mit einem Länge/Durchmesser-Verhältnis im Bereich von 1:1 bis 3:1 vorliegen, deren Enden nach der Extrusion in Rondiergeräten chargenweise oder kontinuierlich verrundet wurden.

5. Verfahren zur Herstellung von Kunststoffen, wobei man pulverförmige und/oder granulatförmige thermoplastische Homo- und/oder Copolymere zusammen mit den Additiv-Granulaten gemäß den Ansprüchen 1 oder 2 einer formgebenden Verarbeitung unterwirft.

## Claims

1. Additives for the processing of plastics, the additives being selected from the group consisting of antistatic agents, antifogging agents, antioxidants, UV stabilizers, coupling agents, calendering aids, mould release agents, lubricants, release agents, slip agents, plasticizers, perfumes, flame retardants, fillers and agents for increasing thermal stability (heat stabilizers) and being present in a granular supply form, **characterized in that** the granules are present in the form of spherical or cylindrical granules with a length-to-diameter ratio of 1:1 to 3:1 and, after extrusion, the ends of the cylindrical particles are rounded in batches or continuously in rounding units.

2. Additives as claimed in claim 1, **characterized in that** the surface of the granules is additionally powdered with inorganic and/or organic active substances and/or release agents.

3. Compositions for the processing of plastics containing granules according to claim 1 or 2.

4. The use of granules as auxiliaries for processing plastics, **characterized in that** the granules consist of one or more typical plastic additives and are present in the form of spherical or cylindrical granules with a length-to-diameter ratio of 1:1 to 3:1 of which the ends, after extrusion, are rounded continuously or in batches in rounding units.

5. A process for the production of plastics, **characterized in that** powder-form and/or granular thermoplastic homopolymers and/or copolymers are subjected to moulding together with the additive granules according to claim 1 or 2.

## Revendications

1. Additifs sous forme de granulés pour le traitement de matières plastiques, choisis dans le groupe constitué des agents antistatiques, anti-trouble, antioxydants, stabilisants UV, adhésifs, auxiliaires de calandrage, de démoulage, antifriction, antiagglomérants, lubrifiants, plastifiants, odorants, ignifugeants, des matières de charge et des agents permettant d'augmenter la stabilité thermique (stabilisateurs thermiques),
**caractérisés en ce que**
les granulés se présentent sous la forme de grains sphériques à cylindriques ayant un rapport longueur/diamètre situé dans la plage de 1 : 1 à 3 : 1, et les extrémités des particules de forme cylindrique ont été arrondies dans des appareils à polir, en continu ou par lots, après extrusion.

2. Additifs selon la revendication 1, dans lesquels
la surface des granulés est en plus saupoudrée d'antiagglomérants et/ou de substances actives inorganiques et/ou organiques.

3. Agents pour le traitement de matières plastiques contenant des granulés selon les revendications 1 ou 2.

4. Utilisation de granulés à titre d'adjuvants pour le traitement de matières plastiques,
**caractérisée en ce que**
les granulés consistent en un ou plusieurs additif(s) pour matières synthétiques courants et se présentent sous la forme de grains sphériques à cylindriques ayant un rapport longueur/diamètre situé dans la plage de 1 : 1 à 3 : 1, dont les extrémités ont été arrondies dans des appareils à polir en continu ou par lots, après extrusion.

5. Procédé de production de matières plastiques selon lequel on soumet à un traitement de mise en forme des homopolymères et/ou copolymères thermoplastiques pulvérulents et/ou granulés, conjointement avec des additifs granulés selon les revendications 1 ou 2.
